# EUROPÄISCHE PATENTSCHRIFT

(11) **EP 4 112 845 B1**
(45) Veröffentlichungstag und Bekanntmachung des Hinweises auf die Patenterteilung: **18.12.2024**
(21) Anmeldenummer: 21183011.2
(22) Anmeldetag: 01.07.2021
(51) Int. Cl.: E04H 12/08, F03D 13/20

(54) **WINDENERGIEANLAGE UND VERFAHREN ZUM HERSTELLEN EINES WINDENERGIEANLAGEN-TURMS**
WIND ENERGY SYSTEM AND METHOD FOR PRODUCING A WIND ENERGY TOWER
ÉOLIENNE ET PROCÉDÉ DE FABRICATION D'UNE TOUR D'ÉOLIENNE

(43) Veröffentlichungstag der Anmeldung: 04.01.2023
(73) Patentinhaber: Wobben Properties GmbH, 26607 Aurich (DE)
(72) Erfinder: Kersten, Roy, 39291 Hohenwarthe (DE)
(74) Vertreter: Eisenführ Speiser

(56) Entgegenhaltungen:
- EP-A1- 0 066 340
- EP-A1- 2 253 781

## Beschreibung

Die vorliegende Erfindung betrifft einen Windenergieanlagen-Turm, eine Windenergieanlage sowie ein Verfahren zum Herstellen eines Windenergieanlagen-Turms.

Typischerweise weisen die Türme einer Windenergieanlage im unteren Turmsegment eine Türöffnung auf, damit Servicepersonal die Windenergieanlage betreten kann. Dazu muss eine Öffnung in der Wandung eines unteren Turmsegments vorhanden sein. Bei Turmsegmenten aus Stahl werden dazu Türzargen oder verstärkte Türbleche an- oder eingeschweißt. Dies ist erforderlich, weil jede Öffnung in einem Turmsegment zu einer mechanischen Schwächung des Turmsegmentes führt. Ein Auf- oder Anschweißen von Türzargen oder verstärkten Türblechen ist jedoch aufwändig und kostenintensiv.

Es ist daher eine Aufgabe der vorliegenden Erfindung, einen Windenergieanlagen-Turm sowie ein Verfahren zum Herstellen eines Turms einer Windenergieanlage vorzusehen, bei welchem Öffnungen in der Turmwandung vorgesehen werden können, welche eine Schwächung eines Turmsegmentes reduziert und kostengünstig ist.

Diese Aufgabe wird durch einen Windenergieanlagen-Turm nach Anspruch 1 sowie durch ein Verfahren zum Herstellen eines Windenergieanlagen-Turms nach Anspruch 4 gelöst.

Somit wird ein Windenergieanlagen-Turm vorgesehen, der mindestens ein erstes und zweites Turmsegment aufweist. Das erste Turmsegment weist eine Stahlwandung und mindestens eine erste Öffnung als Türöffnung in der Stahlwandung auf. Ferner ist mindestens ein Verstärkungselement mit einer ausgehärteten Vergussmasse um einen Bereich der ersten Öffnung herum vorgesehen.

Damit kann eine Öffnung in einer Wandung eines Stahlturmsegmentes vorgesehen sein. Zur Verbesserung der Stabilität des Stahl-Turmsegmentes wird ein Verstärkungselement mit einer ausgehärteten Vergussmasse um die erste Öffnung herum vorgesehen. Somit kann erreicht werden, dass Türzargen oder Türbleche verbessert an die Stahlwandung angebracht werden können, um eine Verbesserung der Festigkeit des Turmsegmentes zu erreichen.

Gemäß der vorliegenden Erfindung weist das Verstärkungselement Verzahnungselemente auf, welche innen an der Wandung befestigt sind. Des Weiteren weist das Verstärkungselement die ausgehärtete Vergussmasse innen an der Wandung um die erste Öffnung herum auf. Die Verzahnungselemente ragen in die ausgehärtete Vergussmasse hinein. Gemäß einem Aspekt der vorliegenden Erfindung weist das Verstärkungselement Bewehrungsstäbe zur Verstärkung auf.

Die Erfindung betrifft ebenfalls ein Verfahren zum Herstellen eines Windenergieanlagen-Turms. Ein Turmsegment mit einer Stahlwandung und einer ersten Öffnung als Türöffnung wird ausgeformt. Verzahnungselemente werden an der Stahlwandung um die erste Öffnung herum befestigt. Eine Schale wird um die Öffnung herum vorgesehen. Die Verzahnungselemente ragen in ein Volumen hinein, das durch die Schalung umgeben ist. Vergussmasse wird in die Schalung eingefüllt und ausgehärtet.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine Darstellung einer Windenergieanlage gemäß einem Ausführungsbeispiel der Erfindung,
- Fig. 2: zeigt einen Ausschnitt einer Schnittansicht eines Turmsegmentes der Windenergieanlage von Fig. 1, und
- Fig. 3: zeigt eine schematische Draufsicht auf eine Türöffnung in einer Wandung eines Turmsegmentes der Windenergieanlage von Fig. 1.

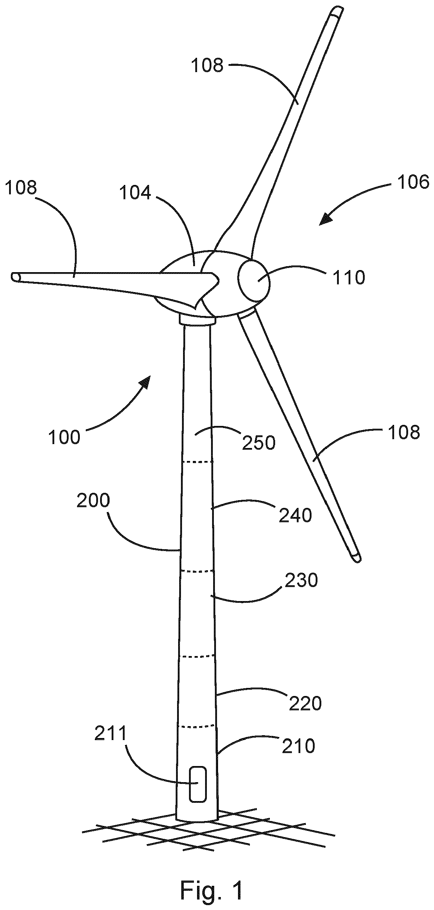

Fig. 1 zeigt eine Darstellung einer Windenergieanlage gemäß einem Ausführungsbeispiel der Erfindung. Die Windenergieanlage 100 weist einen Turm 200 auf, welcher aus mehreren Turmsegmenten 210 - 250 zusammengesetzt ist. Auf dem Turm 200 ist eine Gondel 104 sowie ein aerodynamischer Rotor 106 mit einem Spinner 110 und drei Rotorblättern 108 vorgesehen. Innerhalb der Gondel 104 ist ein elektrischer Generator vorgesehen, welcher direkt oder indirekt mit dem aerodynamischen Rotor 106 verbunden ist und elektrische Energie erzeugen kann.

Ein erstes Turmsegment oder eine erste Turmsektion 210 weist eine Stahlwandung und eine Öffnung 211 auf. Die anderen Turmsegmente 220 - 250 können optional ebenfalls Öffnungen aufweisen. Die Öffnung 211 stellt eine Türöffnung in dem ersten Turmsegment 210 dar.

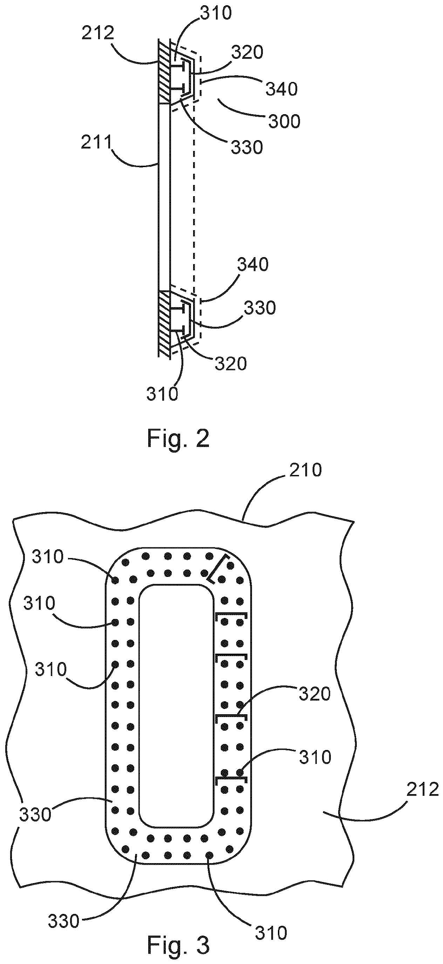

Fig. 2 zeigt einen Ausschnitt einer Schnittansicht eines Turmsegmentes der Windenergieanlage von Fig. 1. Das untere Turmsegment 210 weist eine Stahlwandung 212 sowie eine Öffnung 211 in der Wandung 212 auf. Die Öffnung 211 kann beispielsweise eine Türöffnung darstellen. Zur Verbesserung der mechanischen Steifigkeit der Stahlwandung 212 im Bereich der Öffnung 211 wird ein Verstärkungselement 300 vorgesehen. An einer Innenseite der Stahlwandung 212 ist dazu eine Mehrzahl von Verzahnungselementen 310 um die Öffnung 211 herum vorgesehen. Die Verzahnungselemente 310 können beispielsweise Kopfbolzendübel darstellen, welche an der Innenseite der Wandung 212 befestigt (beispielsweise verschweißt) werden können. Optional können im Bereich der Verzahnungselemente 310 Bewehrungsstäbe 320 vorgesehen werden, bevor eine Vergussmasse 330 vorgesehen wird. Dies dient der verbesserten mechanischen Steifigkeit des Verstärkungselementes 300.

Das Verstärkungselement 300 weist somit die Verzahnungselemente 310, optional die Bewehrungsstäbe 320, und die Vergussmasse 330 auf.

Fig. 3 zeigt eine schematische Draufsicht auf eine Türöffnung in einer Wandung eines Turmsegmentes der Windenergieanlage von Fig. 1. Um die Türöffnung 210 herum (vorzugsweise an der Innenseite der Wandung 212) ist ein Verstärkungselement oder Versteifungselement 300 vorgesehen. Das Verstärkungselement 300 weist Verzahnungselemente 310 auf, welche an der Stahlwandung 212 befestigt, insbesondere verschweißt sind.

Zur Herstellung des Verstärkungselementes 300 können die Verzahnungselemente 310 an die Stahlwandung 212 verschweißt werden. Anschließend können optional Bewehrungsstäbe 320 vorgesehen sein. Danach kann eine Schalung 340 um die Öffnung 210 herum vorgesehen sein und anschließend kann eine Vergussmasse 330 in die Schalung 340 eingefüllt werden. Nach Abbinden bzw. Aushärten der Vergussmasse 330 kann die Schalung 340 optional entfernt werden. Die Vergussmasse 330 kann Ortbeton oder ein Vergussmittel wie z. B. Pagel darstellen.

Das Verstärkungselement kann somit einen Verstärkungsring oder einen Versteifungsring aus ausgehärteter Vergussmasse darstellen, die über Kopfbolzen(dübel) an einer Stahlwandung befestigt sind und um die Öffnung herum angeordnet sind.

### Bezugszeichenliste

- 100: Windenergieanlage
- 104: Gondel
- 106: aerodynamischer Rotor
- 108: Rotorblätter

- 200: Turm
- 210: erstes Turmsegment/Turmsektion
- 211: (Tür)Öffnung
- 212: Turmwandung
- 220: zweites Turmsegment/Turmsektion
- 230: drittes Turmsegment/Turmsektion
- 240: viertes Turmsegment/Turmsektion
- 250: fünftes Turmsegment/Turmsektion

- 300: Verstärkungselement
- 310: Verzahnungselemente
- 320: Bewehrungsstäbe
- 330: Vergussmasse
- 340: Schalung

## Patentansprüche

1. Windenergieanlagen-Turm (200), mit
mindestens einem ersten und zweiten Turmsegment (210, 220),
wobei das erste Turmsegment (210) eine Stahlwandung (212) und mindestens eine erste Öffnung (211) als Türöffnung aufweist, **dadurch gekennzeichnet, dass** das erste Turmsegment (210) weiterhin mindestens ein Verstärkungselement (300) mit einer ausgehärteten Vergussmasse (330) um einen Bereich der ersten Öffnung (211) herum aufweist,
wobei das Verstärkungselement (300) Verzahnungselemente (310), welche innen an der Wandung (212) befestigt sind, und die ausgehärtete Vergussmasse (330) innen an der Wandung (212) um die erste Öffnung (211) herum aufweist,
wobei die Verzahnungselemente (310) in die ausgehärtete Vergussmasse (330) hineinragen.

2. Windenergieanlagen-Turm (100) nach Anspruch 1, wobei
das Verstärkungselement (300) Bewehrungsstäbe (320) zur Verstärkung des Verstärkungselementes (300) aufweist.

3. Windenergieanlage- mit
einem Windenergieanlagen-Turm (200) nach einem der Ansprüche 1 oder 2.

4. Verfahren zum Herstellen eines Windenergieanlagen-Turms, mit den Schritten:
Formen eines Turmsegmentes (210) mit einer Stahlwandung (212) und einer ersten Öffnung (211) als Türöffnung,
Befestigen von Verzahnungselementen (310) an der Stahlwandung (212) um die erste Öffnung (211) herum,
Vorsehen einer Schalung (340) um die Öffnung (211) herum, wobei die Verzahnungselemente (310) in ein Volumen hineinragen, das durch die Schalung (340) umgeben ist,
Einfüllen von Vergussmasse (330) in die Schalung (340), und
Aushärten der Vergussmasse (330).

## Claims

1. A wind turbine tower (200), comprising
at least one first and second tower segment (210, 220),
wherein the first tower segment (210) has a steel wall (212) and at least one first opening (211) as doorway,
**characterized in that** the first tower segment (210) further comprises at least one reinforcing element (300) with a cured casting compound (330) around an area of the first opening (211),
wherein the reinforcing element (300) has tooth elements (310) fastened to the wall (212) inside, and the cured casting compound (330) is arranged on the wall (212) inside around the first opening (211),
wherein the tooth elements (310) protrude into the cured casting compound (330).

2. The wind turbine tower (100) according to claim 1, wherein
the reinforcing element (300) has reinforcing bars (320) for reinforcing the reinforcing element (300).

3. Wind turbine, comprising
a wind turbine tower (200) according to claim 1 or 2.

4. A method for manufacturing a wind turbine tower, comprising the steps:
Forming a tower segment (210) with a steel wall (212) and a first opening (211) as doorway,
Fastening tooth elements (310) to the steel wall (212) around the first opening (211),
Providing a formwork (340) around the opening (211), wherein the tooth elements (310) protrude into a volume that is surrounded by the formwork (340),
Filling casing compound (330) into the formwork (340), and
Curing the casting compound (330).

## Revendications

1. Tour d'éolienne (200), avec
au moins un premier et deuxième segment de tour (210, 220),
dans laquelle le premier segment de tour (210) présente une paroi en acier (212) et au moins une première ouverture (211) en tant qu'ouverture de porte, **caractérisée en ce que** le premier segment de tour (210) présente en outre au moins un élément de renforcement (300) avec une masse de scellement (330) durcie autour d'une zone de la première ouverture (211),
dans laquelle l'élément de renforcement (300) présente des éléments à denture (310), lesquels sont fixés intérieurement sur la paroi (212), et la masse de scellement (330) durcie intérieurement sur la paroi (212) autour de la première ouverture (211),
dans laquelle les éléments à denture (310) pénètrent dans la masse de scellement (330) durcie.

2. Tour d'éolienne (100) selon la revendication 1, dans laquelle l'élément de renforcement (300) présente des barres d'armature (320) pour le renforcement de l'élément de renforcement (300).

3. Éolienne - avec
une tour d'éolienne (200) selon l'une quelconque des revendications 1 ou 2.

4. Procédé pour fabriquer une tour d'éolienne, avec les étapes de :
formation d'un segment de tour (210) avec une paroi en acier (212) et une première ouverture (211) comme ouverture de porte,
fixation d'éléments à denture (310) sur la paroi en acier (212) autour de la première ouverture (211),
prévision d'un coffrage (340) autour de l'ouverture (211), dans lequel les éléments à denture (310) pénètrent dans un volume qui est entouré par le coffrage (340),
versement de la masse de scellement (330) dans le coffrage (340), et
durcissement de la masse de scellement (330).
